Europäisches Patentamt

European Patent Office

Office européen des brevets

(11) Numéro de publication : **0 477 351 B1**

# (12) FASCICULE DE BREVET EUROPEEN

(45) Date de publication du fascicule du brevet :
**08.02.95 Bulletin 95/06**

(51) Int. Cl.$^6$ : **H04N 5/272**

(21) Numéro de dépôt : **91908586.0**

(22) Date de dépôt : **10.04.91**

(86) Numéro de dépôt international :
**PCT/FR91/00296**

(87) Numéro de publication internationale :
**WO 91/15921 17.10.91 Gazette 91/24**

(54) PROCEDE ET DISPOSITIF DE MODIFICATION DE ZONE D'IMAGES SUCCESSIVES.

(30) Priorité : **11.04.90 FR 9004663**

(43) Date de publication de la demande :
**01.04.92 Bulletin 92/14**

(45) Mention de la délivrance du brevet :
**08.02.95 Bulletin 95/06**

(84) Etats contractants désignés :
**BE DE DK ES FR GB IT NL SE**

(56) Documents cités :
**EP-A- 0 360 576**

(73) Titulaire : **Symah Vision**
**11, rue E. Leblanc**
**F-75015 Paris (FR)**

(72) Inventeur : **LUQUET, André**
**10, rue de Lapparent**
**F-75007 Paris (FR)**
Inventeur : **REBUFFET, Michel**
**5, rue Filliette-Nicolas-Philibert**
**F-92500 Rueil-Malmaison (FR)**

(74) Mandataire : **Fort, Jacques**
**CABINET PLASSERAUD**
**84, rue d'Amsterdam**
**F-75009 Paris (FR)**

## Description

L'invention a pour objet un procédé et un dispositif de modification d'une zone d'images successives constituant une séquence, représentant une scène évolutive, fournies par au moins une caméra.

Le terme "séquence d'images" doit être interprété dans un sens large et comme désignant aussi bien le signal image (analogique ou numérique) produit en temps réel par une caméra ou une régie vidéo qu'une séquence enregistrée sur un support d'archivage inscriptible (numérique ou analogique), sur un support photographique, magnétique ou optique, sous une forme autorisant une visualisation, une restitution ou une diffusion ultérieure à une cadence équivalente à la cadence temps-réel.

De façon plus précise, l'invention a pour objet un procédé et un dispositif permettant de remplacer une fraction d'image correspondant à une région précise ou à un objet de la scène qu'on dénommera ci-dessus "zone cible", par une représentation d'une autre région précise, ou d'un autre objet, réel ou non réel, qu'on dénommera ci-dessous "patron".

Les domaines d'application de l'invention sont extrêmement variés. On peut citer, de façon non limitative :
- la publicité, le procédé permettant d'ajouter ou de remplacer des panneaux publicitaires lors des transmissions ou retransmissions de manifestations sportives ou autres ;
- la production d'oeuvres audio-visuelles, notamment de fiction, le procédé permettant alors de remplacer le décor d'un tournage d'une production par un autre décor ;
- la simulation, où le procédé permet d'insérer la représentation d'un objet réel dans un environnement constitué par une image de synthèse.

On connaît déjà de nombreux procédés utilisables pour modifier une zone cible dans une image. On peut par exemple identifier la zone cible par une couleur particulière, de préférence inutilisée dans le reste de l'image pour éviter toute ambiguïté. Mais ce procédé ne tient pas compte des conditions d'acquisition de l'image, par exemple des mouvements de la caméra. Le patron ne peut en conséquence suivre l'évolution de la scène de façon satisfaisante.

On sait également, en synthèse d'image, générer un patron qu'on incruste dans une zone cible, mais à condition que la position, la focale et la mise au point ne changent pas.

Ces procédés, ainsi que celui utilisant des plans superposés mis en oeuvre pour réaliser des films associant des scènes réelles et des personnages de dessins animés, ont des limitations qui excluent leur emploi ou font apparaître les truquages chaque fois que les conditions d'acquisition de l'image varient dans le temps de façon significative.

On connaît enfin (EP-A-0360576) un procédé permettant de créer une séquence composite à partir de deux séquences d'image vidéo. Un opérateur indique manuellement au moins quatre points de référence représentant les coins d'un polygone et un circuit de transformation modifie les adresses des pixels dans le polygone pour permettre la combinaison.

Ce procédé exige une intervention manuelle à chaque image.

L'invention vise à fournir un procédé de modification d'une même zone dans des images successives d'une même séquence, répondant mieux que ceux antérieurement connus aux exigences de la technique, utilisable même lorsque les conditions d'acquisition évoluent, notamment en cadrage, en focale et en mise au point, par prise en compte automatique de cette évolution.

Pour cela l'incrustation de la représentation du Patron est précédée d'une adaptation de cette représentation destinée à la faire exactement correspondre à la représentation de la zone cible dans l'image globale.

L'invention propose en conséquence un procédé de modification du contenu d'une séquence d'images représentant une scène évolutive et présentant un degré élevé de corrélation entre images successives d'un même plan, les images étant représentables par une matrice de pixels, conforme à la revendication 1.

Le terme "plan" désigne une séquence d'images représentant la même scène acquise par la même caméra sans rupture temporelle ou spatiale brutale.

Lorsque l'invention est mise en oeuvre en temps différé, des repères d'identification de la cible peuvent être indiqués manuellement sur la première image de chaque plan pour faciliter le calcul. Cette opération peut s'effectuer par pointage à l'aide d'un crayon à lumière ou sur une tablette. En temps réel, la recherche peut s'effectuer dans l'ensemble de l'image ou, plus souvent, dans une fraction déterminée seulement.

Après la première image la recherche par traitement d'image est facilitée du fait que les déplacements de la zone cible et ses variations de grandeur d'une image à la suivante sont limitées par les caractéristiques de la caméra. Elle s'effectue par la recherche dans la zone cible de "points caractéristiques" (typiquement des angles de lignes de contraste) répartis et dont la représentation est mémorisée. Si par exemple la zone cible est un panneau publicitaire portant des caractères alpha-numériques, les "points caractéristiques" peuvent être des graphèmes particulièrement représentatifs, tels que jonctions entre jambages et barres transversales de certaines lettres. L'identification s'effectue alors sur des voisinages dont la taille est par exemple de 6 x 8 pixels, par des procédés de reconnaissance de forme qui sont bien connus et sont efficaces quelle que soit l'échelle de l'image. Lorsque l'image est affectée de bruit, il est avantageux de rechercher 10 à 20 points caractéristiques pour disposer de reconnaissances en nombre suffisant. Ensuite on déduit, de la position des points caractéristiques, quatre repères au moins ayant une répartition géométrique caractéristique, tels que les quatre coins d'un panneau publicitaire.

L'invention est applicable même lorsque la scène comporte des obstacles fixes ou mobiles placés entre la caméra et la zone cible et qui peuvent s'interposer entre les deux : dans ce cas les parties de l'image correspondant à ces obstacles seront identifiées par leur défaut de corrélation avec l'environnement, à condition que l'obstacle diffère du fond par sa luminance et/ou sa couleur et seule sera remplacée la partie de la zone cible qui n'est pas masquée par l'obstacle.

Dans tous les cas, le procédé suivant l'invention utilise la continuité spatiale et temporelle de la scène en cours d'un même plan.

L'invention propose également un dispositif permettant de mettre en oeuvre le procédé ci-dessus défini, comprenant des moyens de prise de vues fournissant chaque image sous forme d'une matrice de pixels, les valeurs radiométriques (luminance et éventuellement chrominance) de chaque pixel étant sous forme numérique, conforme à la revendication 14.

L'invention sera mieux comprise à la lecture de la description qui suit, d'un mode particulier de réalisation, donné à titre d'exemple non limitatif. La description se réfère aux dessins qui l'accompagnent, dans lesquels :

- la figure 1 est un schéma de principe montrant une scène observée, un objet cible, un obstacle et une caméra de prise de vue ;
- la figure 2 est une représentation d'images de la scène à des instant successifs ;
- les figures 3A et 3B constituent un organigramme de principe du procédé ;
- les figures 4A à 4E constituent un organigramme de mise en oeuvre du procédé dans un cas particulier (images prises par une caméra pouvant tourner).

Le procédé suivant l'invention sera décrit dans son application à la substitution d'un patron, constitué par un panneau publicitaire de dimensions et d'emplacement fixes, à une cible constituée par un autre panneau publicitaire. Les deux panneaux sont rectangulaires et identifiables par les coins du panneau. Dans la cible sont définis des "points caractéristiques", généralement au nombre de 10 à 20, constitués par des graphèmes facilement identifiables. Si la cible contient des caractères alpha-numériques, ces graphèmes sont par exemple des croisements entre jambages, définis dans un voisinage qui est par exemple de 6 x 8 pixels.

Cette application peut notamment être utilisée dans le cas d'une manifestation sportive diffusée dans plusieurs pays avec des panneaux publicitaires différents.

ETAPES PRELIMINAIRES

Une étape préliminaire consiste à sélectionner et à mémoriser la cible, ou la zone d'image qui la contient, sous forme de plusieurs représentations :
- à des échelles différentes, dans toute la plage de variation que peut couvrir la variation de focale de la caméra de prise de vue, par exemple pour des échelles successives découlant l'une de l'autre par multiplication par racine de deux pour faciliter la corrélation ;
- éventuellement, en cas de cible dont l'orientation par rapport à la caméra peut varier, à des perspectives différentes.

On extrait ensuite, à l'aide d'un calculateur, des informations caractéristiques liées à la cible, pour les différentes échelles choisies. Ces informations caractéristiques sont des points anguleux de lignes de contraste. Elles peuvent être :
- des éléments de la cible elle-même, tels que des graphèmes ayant une disposition relative invariable, des points anguleux de contour, une répartition de couleurs,
- et/ou des éléments occupant dans la scène une position invariable par rapport à la cible, entourant celle-ci et aisément identifiables à l'aide des critères ci-dessus.

Une autre étape préliminaire consiste soit à sélectionner le "patron" dans une bibliothèque d'images numériques, soit, si ce modèle n'existe pas encore, à le faire créer par un graphiste, qui utilise un dispositif matériel et logiciel du type palette graphique (harriette de Quantel -1990-, ou TIPS sur carte ATT Vista -1988-) ou encore à le créer en numérisant une image acquise par une caméra vidéo ou un scanner. Cette opération de création est classique et hors du cadre de l'invention.

A partir de cette image, on crée plusieurs images dérivées, correspondant aux mêmes échelles que celles de la cible.

ACQUISITION

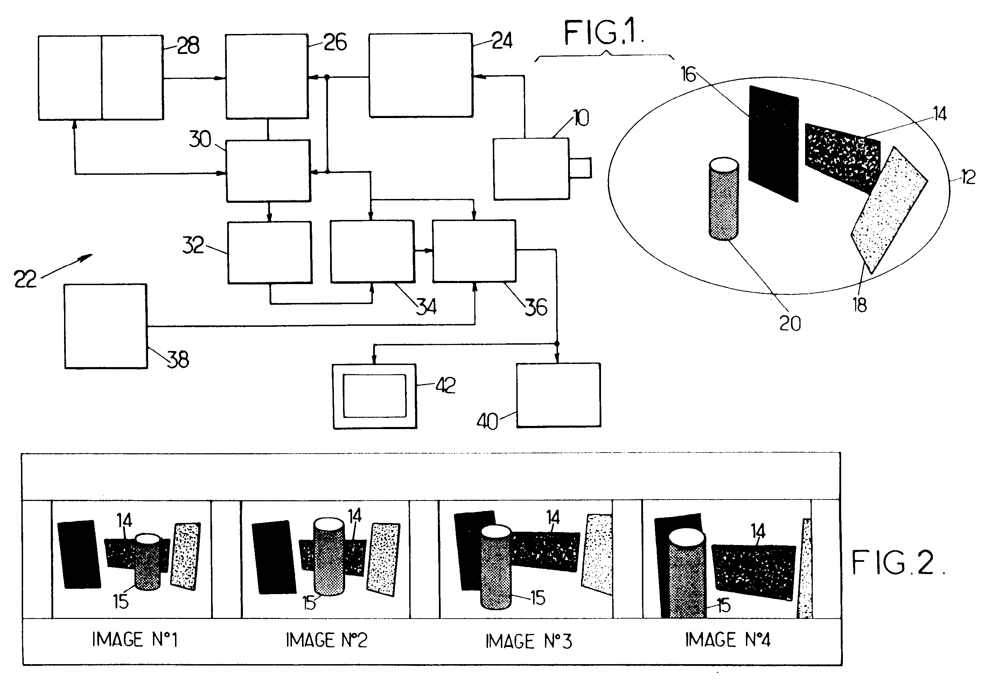

Pour limiter les exigences en matière de vitesse de calcul, le dispositif de mise en oeuvre de l'invention opèrera généralement en temps différé, à partir d'images mémorisées. Pour simplifier la représentation, la figure 1 montre cependant à la fois les moyens d'acquisition des images et le dispositif de modification proprement dit.

La figure 1 montre, à titre d'exemple, une caméra 10, qu'on supposera à focale variable, dirigée vers une scène 12 contenant une cible 14 à remplacer, cette cible étant dans une position invariable par rapport à deux objets 16 et 18 et pouvant être partiellement ou totalement masquée par un obstacle 20. La caméra 10 est reliée à un organe d'enregistrement, tel qu'un magnétoscope, lorsque la transformation s'effectue en temps différé. En cas de fonctionnement en temps réel, la caméra attaque directement un calculateur 22, par l'intermédiaire d'un convertisseur analogique-numérique si elle ne fournit pas l'image sous forme d'une matrice de pixels identifiés chacun par un mot de plusieurs bits représentant des valeurs de luminance et éventuellement de chrominance.

Le procédé suivant l'invention traite chaque plan indépendamment des autres : pour chaque plan, les images successives sont acquises par la même caméra 10 et présentent une forte corrélation spatiale et temporelle l'évolution de l'image étant progressive. Comme le montre la figure 2 la zone cible 14 peut varier en dimensions, et être dans certaines images masquée par un obstacle 15 (images n° 1, 2 et 3 sur la figure 2).

Le calculateur extrait ensuite des informations caractéristiques du panneau cible d'une part, du panneau patron d'autre part, pour la même échelle. Ces informations peuvent être :

La caméra 10 peut être munie de moyens indiquant au calculateur 22 les variations de paramètres liés à la caméra, tels que la focale, permettant de faciliter la mise en correspondance d'éléments caractéristiques du panneau cible et d'éléments correspondants parmi les diverses représentations du mobile, mémorisées aux différentes échelles ou obtenues par interpolation ; un suivi complet de la cible par ce moyen n'est cependant pas satisfaisant, à cause des vibrations inévitables, de l'accumulation des erreurs et de la nécessité d'un matériel de prise de vues non standard. Il est plus avantageux d'estimer la variation de focale de la caméra, les angles de site et de gisement (donc l'orientation sous laquelle la caméra acquiert le panneau cible) à l'aide d'un modèle mathématique.

Ce modèle peut être établi en faisant intervenir les coordonnées x et y des coins du panneau. On sait en particulier que les variations de focale se traduisent en x par une variation de la forme :

$$X = ax + b \quad (1)$$

et les variations d'orientation (perspective conique) par =

$$X = (cx + d)/(ex + f) \quad (2)$$

où a,... f sont des constantes. Souvent le modèle (2) peut être modifié sous forme d'un polynôme du second degré;

La première opération effectuée sur l'image courante par le calculateur 22 est la recherche du panneau cible 14, par recherche de la meilleure correspondance possible avec les informations caractéristiques mémorisées. Cette recherche s'effectue par des méthodes classiques de corrélation numérique, entre des points caractéristiques du patron, aux différentes échelles, et les points caractéristiques extraits de chaque image. Elle tient compte de ce que des obstacles peuvent masquer certains des points caractéristiques.

La recherche peut être simplifiée si elle tient compte des contraintes :
- d'évolution géométrique, imposées par le dispositif (les vitesses de variation de focale et de rotation étant limitées) ;
- d'évolution de teintes imposées par le dispositif ou la scène.

Dans le cas où seules sont à prendre en compte des transformations de type "similitude géométrique", provoquées par des variations de longueur focale avec de faibles rotations, il suffit d'un modèle mathématique de déformation géométrique, du genre utilisé en télédétection diachronique image à image (par exemple mise en oeuvre dans le système ATG. Atelier de Traitement Géométriques du CNES - 1986- disponible auprès de la Société Européenne de Propulsion). Il est obtenu par minimisation des résidus à une fonction polynomiale de degré un ou deux, tant que l'optique de la caméra n'introduit pas de distorsions significatives, c'est-à-dire d'aberrations dues à une trop grande proximité de la cible.

Dans le cas contraire où des modifications importantes d'orientation interviennent, le modèle mathématique de déformation géométrique fait intervenir les modifications de forme du panneau cible sur l'image courante ; on utilise alors la modélisation sous forme d'un rapport de deux polynômes, comme indiqué ci-dessus.

Par filtrage temporel passe-bas sur les modèles géométriques issus de plusieurs images successives (par exemple moyenne arithmétique sur deux à quatre images) d'un même plan, la stabilité temporelle des modèles mathématiques, donc leur qualité, peut être estimée. On peut en conséquence choisir, parmi plusieurs modèles, celui qui représente le mieux la transformation géométrique. En utilisant des points caractéristiques nombreux et répartis dans l'ensemble de la cible, on peut identifier celle-ci même lorsque des points sont derrière un obstacle.

Si les informations de focale et d'orientation ne sont pas fournies par des capteurs portés par la caméra et si on connaît la taille de la cible, le modèle mathématique de transformation géométrique permet également d'estimer la focale et les angles de site et de gisement.

A titre d'exemple, les informations caractéristiques utilisées pour l'estimation de la focale et des angles peuvent être, dans le cas d'une cible constituée par un panneau publicitaire rectangulaire horizontal à fond blanc et d'une caméra n'effectuant que des déplacements en site et en gisement, les quatre graphèmes constitués par les quatre coins du panneau. Elles peuvent être des marques de forme particulière sur un fond uniforme (mur, toile,...) dans le cas où le patron doit être incrusté sur un tel fond à la restitution : la répartition des marques sera alors homothétique de celle de graphèmes particuliers du patron.

## COLORIMETRIE

Une fois ainsi déterminé le modèle mathématique de transformation géométrique, il est en général nécessaire d'estimer la transformation des teintes entre le panneau cible type, (image principale et représentations) et la zone qui lui correspond dans l'image courante, c'est-à-dire de calculer un modèle mathématique de transformation colorimétrique. Une telle transformation est souvent nécessaire, par suite des variations d'éclairement et des caractéristiques de la caméra. Le modèle mathématique est une transformation linéaire fondée sur une comparaison entre uniquement les voisinages et des points du panneau cible servant à la recherche effective de correspondance. Ce modèle peut être élaboré par régression linéaire sur l'intensité et sur les composantes de couleurs R, V, B. Il faut en effet exclure les points qui risqueraient d'appartenir à un obstacle interposé (images n° 1, 2 et 3 de la figure 2).

Dans ce cas encore on effectue un filtrage temporel d'estimation de stabilité permettant d'écarter l'influence du bruit inhérent à la quantification des couleurs.

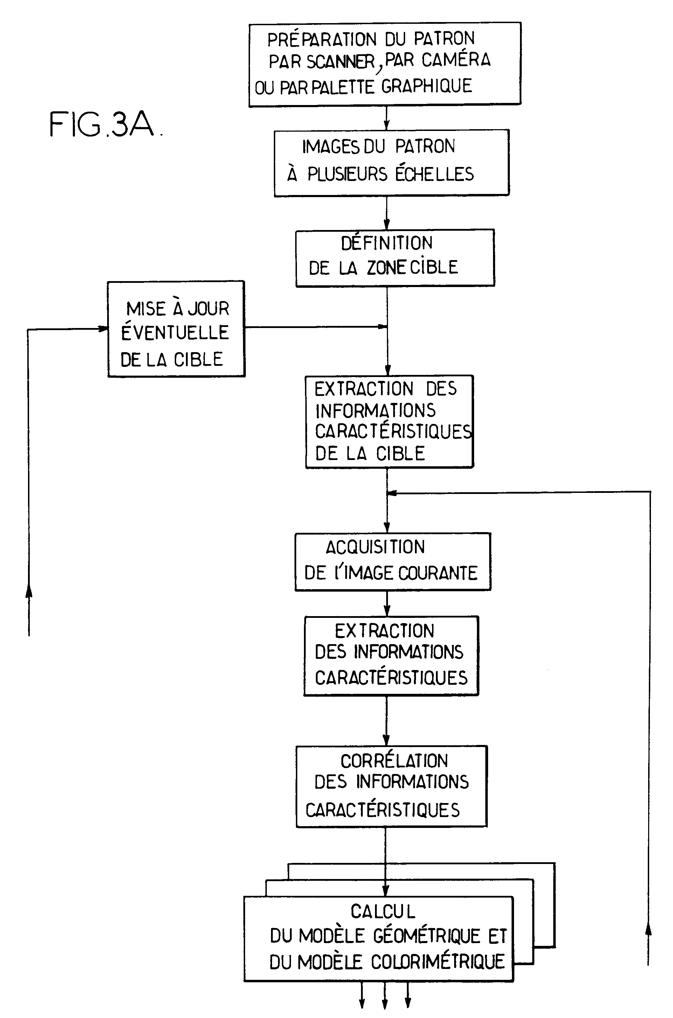

Toutes ces opérations apparaissent sur le trajet principal de l'organigramme de principe de la figure 3A et conduisent, pour chaque image, à l'élaboration de deux transformations (géométrique et colorimétrique) permettant de passer d'une représentation mémorisée de la cible à l'image effective de la zone cible.

## ESTIMATION EVENTUELLE DE LA FTM

A ce stade, il est utile d'estimer la fonction de transfert de modulation, c'est-à-dire la différence de netteté entre le panneau cible de l'image courante et sa représentation mémorisée. Pour cela on compare les spectres de fréquence des voisinages des points caractéristiques correspondants. Cette analyse globalise le filé c'est-à-dire l'effet du mouvement, et les défauts de mise au point.

## TRANSFORMATION

On applique alors, à la représentation mémorisée du panneau cible, (1) le modèle de transformation géométrique, puis (2) le modèle de transformation des teintes, et enfin - dans certains cas - (3) la fonction de transfert de modulation.

Chacune de ces transformations est une transformation linéaire. On peut donc globaliser leur application.

A cette étape, on dispose d'une image courante transformée de la séquence, où le panneau cible a été remplacé par la représentation du panneau cible (image du modèle de la cible préalablement généré).

Les pixels de l'image courante transformée qui diffèrent de l'image courante initiale correspondent aux points de l'image courante initiale qui représentent autre chose que le panneau cible, donc à un obstacle interposé entre la caméra et le panneau.

L'ensemble de ces points constitue un masque associé aux obstacles. Il sera donc possible de n'incruster que la portion du patron correspondant à la zone non masquée (obstacle opaque) ou de modifier localement le patron avant incrustation (obstacle semi-transparent). La substitution du patron s'effectue en effet pixel par pixel.

En particulier, un obstacle mobile peut créer un effet de semi-transparence : un obstacle ajouré (filet de tennis) ou de petite taille (ballon) peut avoir le même effet.

Pour traiter ce cas, le procédé suivant l'invention utilise, dans un mode particulier de réalisation, une carte de transparence fondée sur une évaluation a priori ou ajustée en fonction de la scène réelle. Par exemple on affecte aux points non masqués du panneau une transparence égale à un, et aux points correspondant aux obstacles une transparence égale à zéro. Pour les obstacles semi-transparents, ou pour les objets rapidement mobiles, on affecte aux points correspondants une valeur intermédiaire. On fait l'hypothèse que, à l'échelle où la scène est observée, les obstacles non transparents sont compacts, ce qui permet de filtrer spatialement la carte de transparence par une méthode de "fermeture" classique en morphologie mathématique.

La carte de transparence peut être filtrée temporellement pour des obstacles fixes ; il est aussi possible de filtrer temporellement les obstacles rapidement mobiles, en faisant l'hypothèse que leur taille varie lentement. Ce sont alors les opérations d'ouverture et de fermeture classiques de morphologie mathématique qui peuvent être utilisées. On pourra en trouver une description dans le livre de J. Serra "Image analysis and mathematical morphology", 1982, Academic Press, Londres.

Dans le cas où une confusion de couleur est possible entre un obstacle et les points du panneau cible qu'il masque, on améliorera notablement la discrimination de l'obstacle en utilisant une caméra qui serait munie non pas de trois bandes spectrales, mais d'au moins quatre bandes spectrales, étendant la capacité de mesure des radiométries des points de la scène observée en dehors du spectre visible par l'oeil. Cette méthode est déjà utilisée en analyse de la végétation sur les prises de vue de satellite : la quatrième bande est souvent dans l'IR proche.

## REMPLACEMENT

Une fois ces opérations effectuées on dispose de la totalité des informations nécessaires au remplacement de la cible par le patron.

Ce remplacement exige successivement (a) le traitement du panneau patron mémorisé, puis (b) la substitution des pixels obtenus à ceux de l'image fournie par la caméra et éventuellement mémorisée.

(a) Le traitement implique d'effectuer sur l'image du panneau patron, à l'échelle correspondant à celle utilisée pour l'identification du panneau cible, les mêmes transformations géométrique, colorimétrique et éventuellement de filé ; on applique ensuite la fonction de transparence (identité en cas de transparence égale à 1, suppression en cas de valeur zéro, atténuation en cas de semi-transparence). Le résultat obtenu est incrusté dans l'image courante avant stockage ou diffusion.

Le filtrage temporel peut être purement prédictif et ne tenir compte que des images passées. Il peut, à condition d'utiliser une mémoire tournante dont la capacité est de quelques images, constituant une ligne à retard, utiliser un filtrage partiellement ou totalement a posteriori ou récursif.

Le filtrage temporel, s'il est utilisé, exige de détecter chaque changement de plan qui se traduit par une discontinuité de la transformation, progressive et continue dans un même plan.

Les changements de plan peuvent être indiqués par un capteur équipant la régie. Mais on peut aussi -et c'est cette solution qui sera généralement adoptée- détecter de façon automatique chaque changement de plan par la discontinuité qu'il introduit dans le contenu de l'image de la scène observée.

Par exemple, en cas de zoom, il y aura ré-estimation par recherche d'échelle de représentation du panneau cible qui fait le mieux correspondre la représentation avec le panneau cible dans la scène courante. Cette opération peut être effectuée par une méthode de corrélation de listes des points caractéristiques du type dit "branch and bound". On reprend alors le processus décrit plus haut. On compare aussi les estimations des angles de site et gisement de prise de vue, ce qui permet de reconnaître la caméra qui effectue la prise de vue du nouveau plan, à condition qu'elle n'ait pas été déplacée depuis la précédente prise de vue qu'elle a acquis.

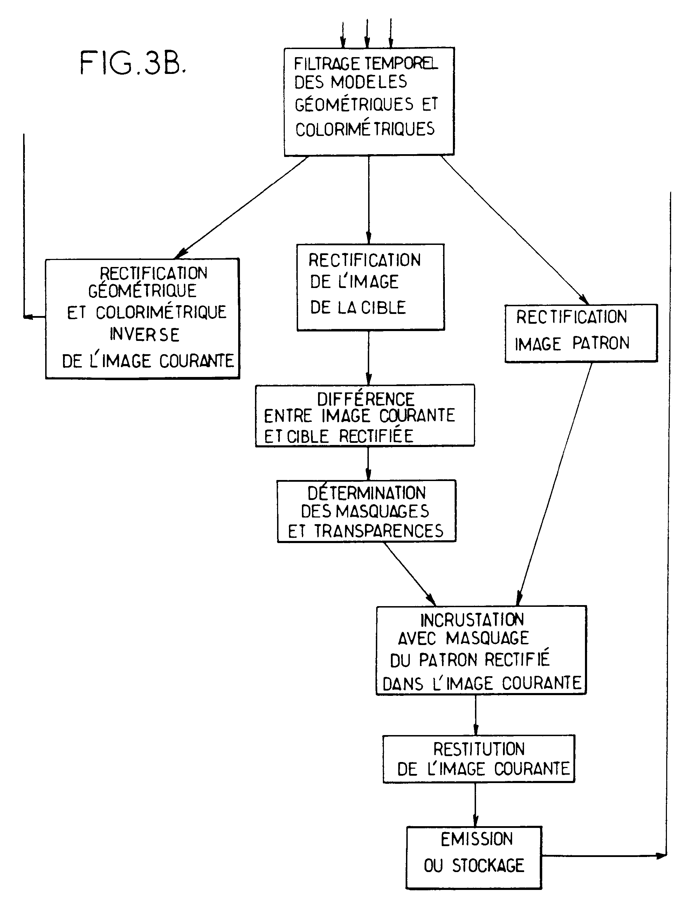

Les opérations successives à effectuer sont énumérées sur les figures 3A et 3B.

Le mode particulier de réalisation qui vient d'être décrit est bien adapté au cas d'une cible constituée par une surface plane. L'invention est également utilisable sans modification importante dans le cas d'une cible dont la surface peut être décomposée en facettes assimilables à des portions planes, ainsi que cela est fait couramment en synthèse d'images.

La décomposition de la cible d'une part, et celle du patron d'autre part, en plusieurs facettes peuvent être effectuées séparément et sans aucune relation.

Le calculateur 22 peut avoir la constitution de principe montrée en figure 1, certains composants pouvant être de même nature que ceux décrits dans le document EP-A-0 360 576 déjà mentionné. Il comporte une mémoire d'images 24 de grande capacité (disque dur par exemple) fournissant chaque image à son tour à un processeur de signal 26. Le processeur est programmé pour identifier et localiser les points caractéristiques de la cible, mémorisés sous forme de voisinages dans une mémoire 28. Le processeur fournit à un comparateur 30 les éléments nécessaires pour sélectionner la représentation appropriée de la zone cible dans la mémoire 28 et la transférer dans une mémoire tampon 32. Un comparateur 34, pixel à pixel, permet de déterminer les parties de la cible masquées par un obstacle et de fournir à un circuit de combinaison 36 nécessaires au remplacement des pixels non masqués par les pixels correspondants de la représentation appropriée du patron, provenant d'une mémoire 38. L'image résultante peut être stockée en mémoire de masse 40 et affichée sur un moniteur 42.

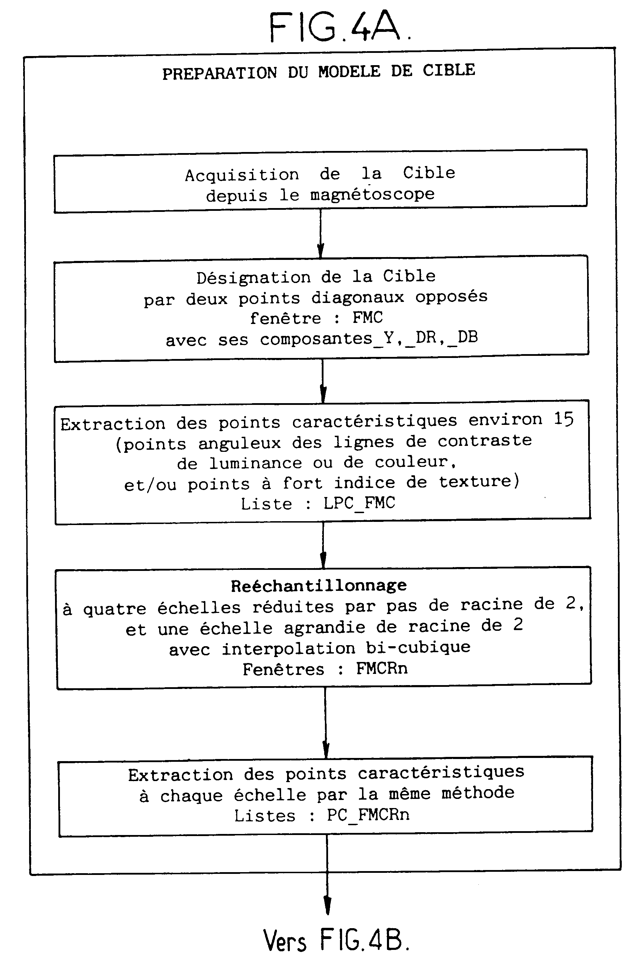

Les figures 4A à 4E montrent, en détail, les étapes du procédé dans le cas particulier d'une scène vue par une seule caméra à focale variable et pouvant tourner.

La figure 4A montre la préparation du modèle de cible, à partir d'un magnétoscope, avec initialisation, pour chaque plan, en désignant (par exemple à l'aide d'une tablette graphique et d'un stylet) deux points diagonaux opposés de la cible.

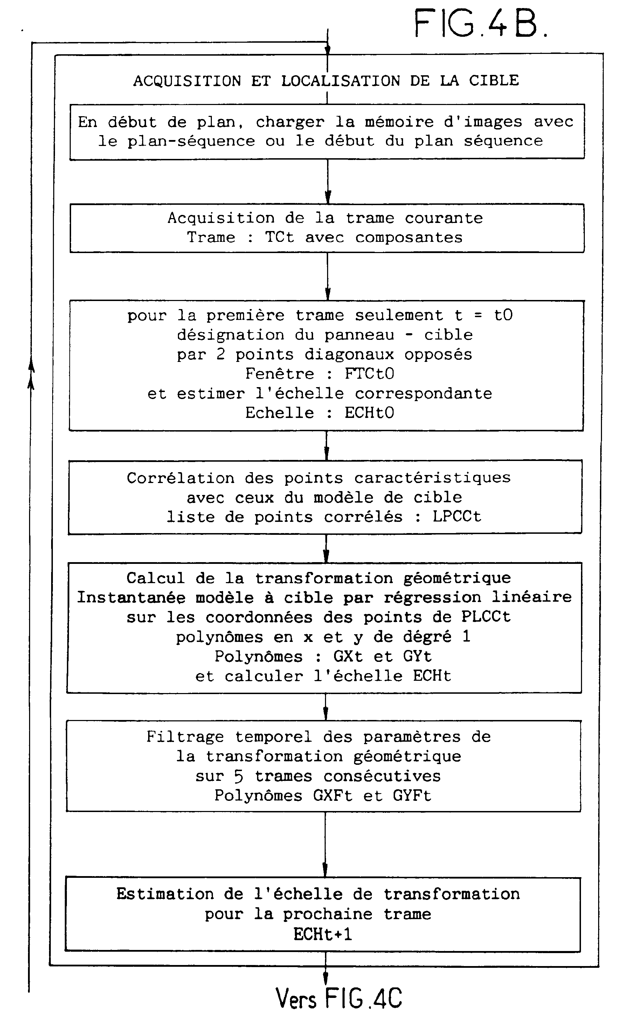

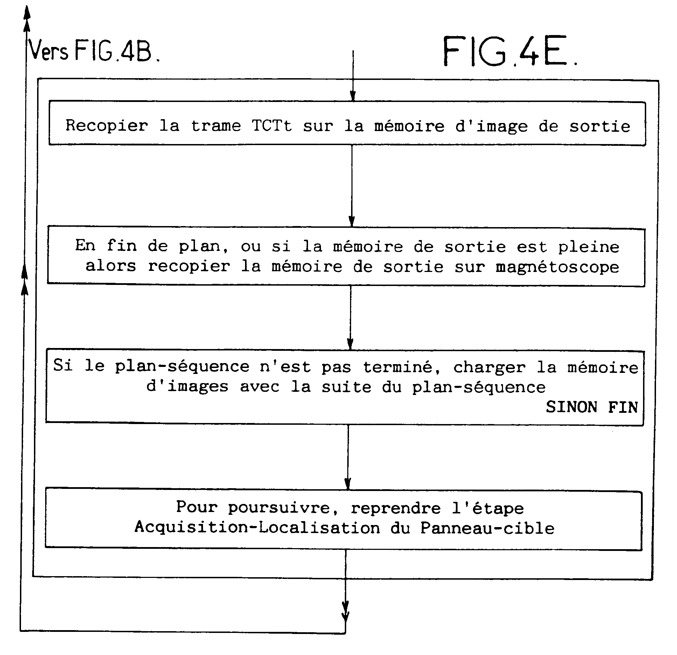

La figure 4B montre l'acquisition et la localisation du panneau cible.

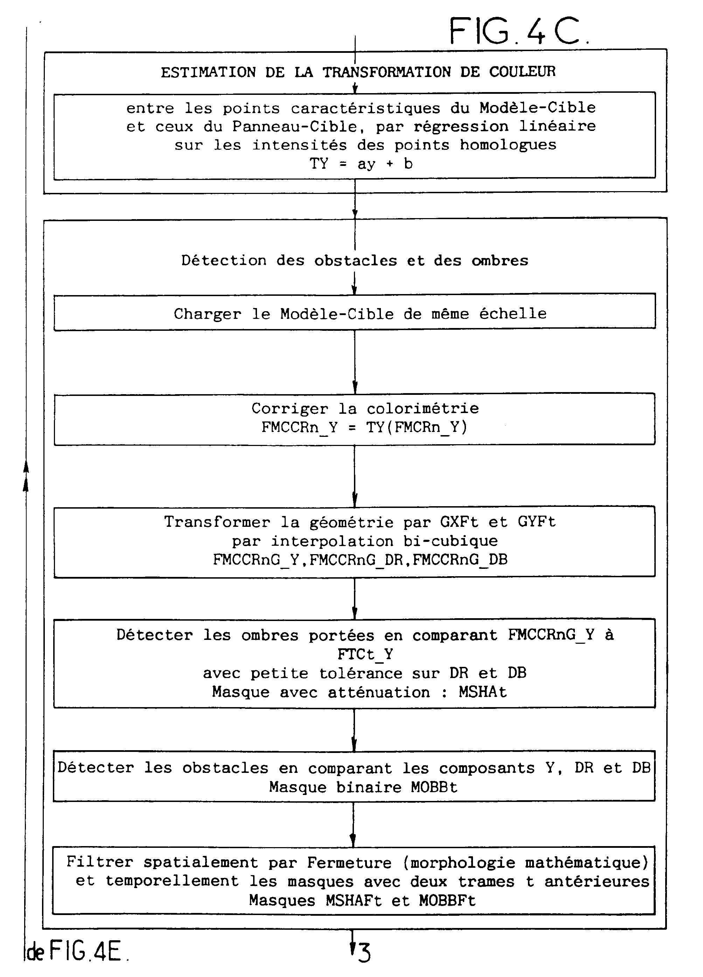

La figure 4C donne des étapes qui ne sont nécessaires que lorsque la transformation colorimétrique doit être estimée et lorsque des obstacles ou des ombres doivent être détectés.

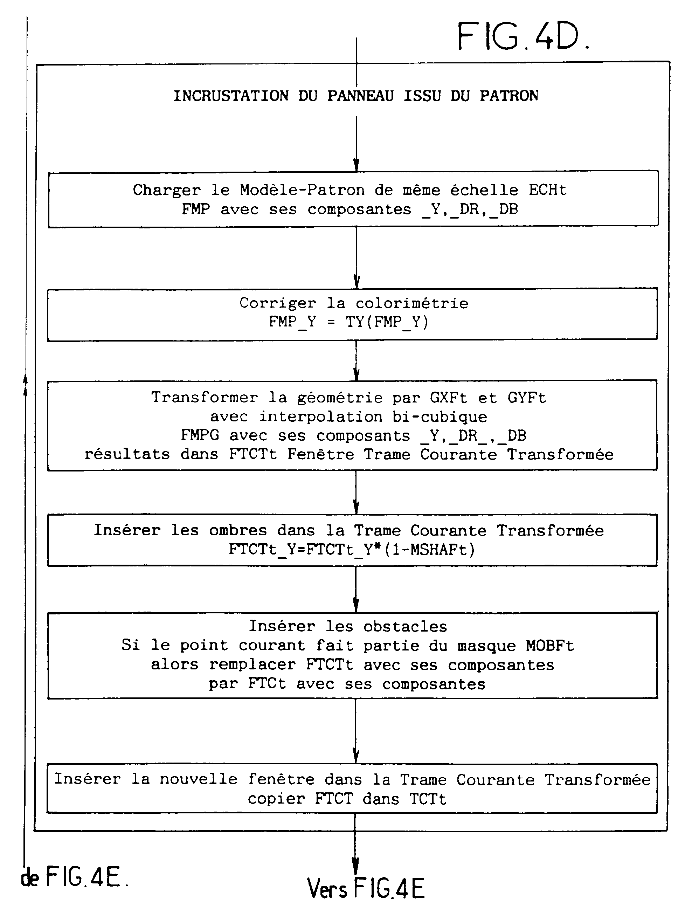

La figure 4D donne les étapes d'incrustation du modèle de patron à l'échelle appropriée dans l'image.

Enfin la figure 4E donne les étapes de stockage sur magnétoscope.

## Revendications

1. Procédé de modification du contenu d'une séquence d'images représentant une scène évolutive, les images étant représentables par une matrice de pixels, suivant lequel :

   - on indique une zone cible non déformable (14) à remplacer dans la scène et on la caractérise, en position et en dimensions, dans chaque image, par des points caractéristiques, liés à ladite zone cible, qu'on mémorise ;

   - on repère automatiquement la zone cible dans les images successives de la même séquence par recherche des points caractéristiques dont la représentation est mémorisée, la recherche s'effectuant par reconnaissance de forme ;

- on détermine la position à donner dans l'image à un modèle superposable à la zone cible, mémorisé sous forme numérique ;
- pour chaque image particulière de la séquence, on détermine automatiquement la transformation géométrique à faire subir au modèle pour qu'il corresponde à l'aspect de la zone cible, par un calcul de corrélation entre l'emplacement relatif des points caractéristiques dans l'image particulière et leur emplacement correspondant au modèle mémorisé et on effectue cette transformation sur le modèle mémorisé ; et
- on substitue, dans l'image, les pixels représentatifs du modèle transformé aux pixels représentatifs de la zone cible.

2. Procédé selon la revendication 1, caractérisé en ce qu'on utilise, comme points caractéristiques, pour déterminer la position et l'orientation de la zone cible, des éléments appartenant à la cible elle-même, tels que des éléments de contour ou une trame.

3. Procédé selon la revendication 1 ou 2, caractérisé en ce qu'on utilise, comme points caractéristiques pour déterminer la position et l'orientation de la zone cible, des éléments répartis autour de la zone cible elle-même.

4. Procédé selon la revendication 1, 2 ou 3, caractérisé en ce qu'on mémorise plusieurs représentations de la zone cible à des échelles et éventuellement des orientations différentes et du modèle aux mêmes échelles et orientations et en ce qu'on détermine la transformation géométrique optimale permettant de passer de la zone cible dans l'image courante à une des représentations de la zone cible afin de faire subir la transformation correspondante à la représentation associée du modèle avant substitution.

5. Procédé selon la revendication 4, caractérisé en ce que les représentations mémorisées de la zone cible sont à des échelles découlant l'une de l'autre par multiplication par une racine de 2.

6. Procédé selon l'une quelconque des revendications précédentes, destiné à remplacer une cible constituée par un panneau publicitaire contenant des caractères alphanumériques, caractérisé en ce que les points caractéristiques comportent des graphèmes desdits caractères, définis chacun sur un voisinage de pixels.

7. Procédé selon la revendication 6, caractérisé en ce que le voisinage est de 6x8 pixels.

8. Procédé selon l'une quelconque des revendications précédentes, caractérisé en ce qu'on ne recherche les points caractéristiques dans une image courante que dans la partie de cette image qui découle de la partie d'une image précédente où lesdits points ont été trouvés en tenant compte de contraintes limitant l'évolution d'une image à la suivante.

9. Procédé selon l'une quelconque des revendications 4 à 7, caractérisé en ce qu'on détermine également la transformation colorimétrique optimale permettant de passer de la zone cible de l'image courante à une des représentations mémorisées de la zone cible et on impose la même transformation à la représentation associée du modèle.

10. Procédé selon l'une quelconque des revendications 4 à 7 et 9, caractérisé en ce qu'on détermine la transformation géométrique et/ou colorimétrique optimale en effectuant plusieurs transformations différentes et en comparant leurs résultats ou en ce qu'on adopte une synthèse des transformations donnant les meilleurs résultats.

11. Procédé selon l'une quelconque des revendications précédentes, caractérisé en ce qu'on détecte la présence d'obstacles entre l'appareil de prise de vues (10) fournissant la séquence d'images, par comparaison entre une représentation mémorisée de la zone cible et la zone cible dans l'image courante réelle, et en ce qu'on substitue les pixels représentatifs du modèle uniquement dans les portions de la zone cible ne présentant pas de différence appréciable.

12. Procédé selon l'une quelconque des revendications 1 à 10, caractérisé en ce qu'on détecte la présence d'obstacles ayant une luminance ou une couleur qui diffère du fond, entre l'appareil de prise de vues (10) et la cible, par défaut de corrélation de l'obstacle et de l'environnement dans l'image.

13. Procédé selon la revendication 1, caractérisé en ce qu'on effectue un filtrage temporel prédictif ou récursif sur un modèle mathématique de la transformation.

14. Dispositif de modification du contenu des images d'une séquence d'images successives, comprenant :
    - des moyens de prise de vues (10,24) fournissant chaque image sous forme d'une matrice de pixels, les valeurs radiométriques correspondant à la luminance et éventuellement à la chrominance, de chaque pixel étant sous forme numérique,

- des moyens (28) de mémorisation de points caractéristiques de localisation répartis d'une zone cible (14) non déformable et à remplacer, dans l'image,

- des moyens (26) pour reconnaître les points caractéristiques et déterminer, automatiquement et sans intervention humaine, sur chaque image d'une séquence d'images présentant un degré élevé de corrélation spatiale entre images successives, les points caractéristiques, par reconnaissance de forme, et pour déduire, de la position des points caractéristiques dans l'image courante, la position et les dimensions de la zone cible ;

- des moyens (30) pour déterminer automatiquement, pour chaque image, la transformation géométrique à faire subir à un modèle mémorisé pour qu'il corresponde aux variations de l'aspect de la zone cible, et

- des moyens (32, 36) de combinaison pour substituer, dans l'image courante les pixels représentatifs du modèle transformé aux pixels représentatifs de la zone cible.

15. Dispositif selon la revendication 14, caractérisé en ce que les moyens de mémorisation (28) sont prévus pour mémoriser plusieurs représentations de la zone cible complète à plusieurs échelles et en ce que des moyens (38) sont prévus pour mémoriser plusieurs représentations, aux mêmes échelles, du modèle superposable à la zone cible.

16. Dispositif selon la revendication 14 ou 15, caractérisé en ce qu'il comporte également des moyens (34) pour comparer une représentation mémorisée de la zone cible (32) et de la zone cible de l'image réelle (24) courante, et pour fournir aux moyens de combinaison (36) l'indication des pixels de la zone cible de l'image réelle courante qui sont non masqués, qui sont les mêmes dans ladite représentation et dans l'image réelle courante, seuls à remplacer.

**Patentansprüche**

1. Verfahren zur Modifizierung des Inhaltes einer Sequenz eines Bildes, welche eine sich entwickelnde Szene darstellt, wobei die Bilder als Pixelmatrix darstellbar sind, **dadurch gekennzeichnet,**

- **daß** eine nicht verformbare Zielzone (14), die in der Szene zu ersetzen ist, gekennzeichnet wird und diese in jedem Bild durch Position und Dimension durch charakteristische Punkte, die mit dieser Zielzone verbunden sind und die gespeichert werden, charakterisiert wird;

- **daß** die Zielzone des Bildes derselben Sequenz automatisch durch eine Untersuchung der charakteristischen Punkte, deren Darstellung gespeichert ist, verfolgt wird, wobei die Untersuchung durch Wiedererkennung der Form durchgeführt wird;

- **daß** die Position bestimmt wird, welche einem zu überlagernden Modell in dem Bild in der Zielzone, gespeichert in numerischer Form, zuzuordnen ist;

- **daß** für jedes einzelne Bild der Sequenz automatisch die geometrische Transformation durch eine Berechnung der Korrelation zwischen der relativen Anordnung der charakteristischen Punkte in dem derzeitigen Bild und ihrer Anordnung entsprechend dem gespeicherten Modell bestimmt wird, der das Modell unterzogen wird, damit es mit dem Aussehen der Zielzone übereinstimmt, und daß diese Transformation an dem gespeicherten Modell durchgeführt wird; und

- **daß** die darstellenden transformierten Pixel des Modelles im Bild durch die darstellenden Pixel der Zielzone ersetzt werden.

2. Verfahren nach Anspruch 1, **dadurch gekennzeichnet, daß** als charakteristische Punkte zur Kennzeichnung der Position und der Ausrichtung der Zielzone die Elemente genutzt werden, die zum Ziel selbst gehören, wie z.B. Konturelemente oder ein Raster.

3. Verfahren nach Anspruch 1 oder 2, **dadurch gekennzeichnet, daß** als charakteristische Punkte zur Bestimmung der Position und der Ausrichtung der Zielzone solche Elemente genutzt werden, die um die Zielzone selbst verteilt sind.

4. Verfahren nach Anspruch 1, 2 oder 3, **dadurch gekennzeichnet, daß** eine Vielzahl von Darstellungen der Zielzone, in verschiedenen Maßstäben und evtl. verschiedenen Ausrichtungen sowie die Maßstäbe und Ausrichtungen des Modelles selbst gespeichert werden, und daß die optimale geometrische Transformation bestimmt wird, die es zuläßt, die Zielzone in dem vorliegenden Bild in eine Darstellung der Zielzone übergehen zu lassen, um die korrespondierende Transformation der mit dem Modell vor der Substitution verbundenen Darstellung entsprechen zu lassen.

5. Verfahren nach Anspruch 4, **dadurch gekennzeichnet, daß** die gespeicherten Darstellungen der Zielzone Maßstäbe haben, die durch Multiplikation mit der Quadratwurzel fließend von einem zum anderen sind.

6. Verfahren nach einem der vorhergehenden Ansprüche, das dazu bestimmt ist, ein Ziel welches aus einer Werbetafel besteht, welche alphanumerische Zeichen enthält, zu ersetzen, **dadurch gekennzeichnet, daß** die charakteristischen Punkte die Graphem der besagten Zeichen umfassen, wobei ein jeder über die benachbarten Pixel bestimmt wird.

7. Verfahren nach Anspruch 6, **dadurch gekennzeichnet, daß** die Umgebung 6 x 8 Pixel beträgt.

8. Verfahren nach einem der vorhergehenden Ansprüche, **dadurch gekennzeichnet, daß** nicht die charakteristischen Punkte in einem vorliegenden Bild untersucht werden, sondern diejenigen, die in dem Teil dieses Bildes, welches aus dem Teil eines vorhergehenden Bildes an die Punkte fließt, gefunden werden, wobei die Einschränkungen, welche die Änderung eines Bildes zum nächsten begrenzen, berücksichtigt werden.

9. Verfahren nach einem der Ansprüche 4 bis 7, **dadurch gekennzeichnet, daß** sowohl die optimale kolorimetrische Transformation bestimmt wird, welche es zuläßt, daß die Zielzone des vorliegenden Bildes in eine der gespeicherten Darstellungen der Zielzone übergeht, als auch daß man dieselbe Transformation auf die mit dem Modell verbundene Darstellung anwendet.

10. Verfahren nach einem der Ansprüche 4 bis 7 und 9, **dadurch gekennzeichnet, daß** eine optimale geometrische und/oder kolorimetrische Transformation bestimmt wird, indem mehrere verschiedene Transformationen durchgeführt und deren Resultate verglichen werden oder daß eine Transformationssynthese angenommen wird, die die besten Ergebnisse liefert.

11. Verfahren nach einem der vorgehenden Ansprüche, **dadurch gekennzeichnet, daß** das Vorhandensein von Hindernissen zwischen dem Aufnahmeapparat (10), welcher die Sequenz von Bildern liefert, festgestellt wird, indem man eine gespeicherte Darstellung der Zielzone und der Zielzone in dem vorliegenden realen Bild vergleicht, und dadurch, daß die darstellenden Pixel des Modelles lediglich in den Teilen der Zielzone ersetzt werden, die keine wahrnehmbare Differenz zeigen.

12. Verfahren nach einem der Ansprüche 1 bis 10, **dadurch gekennzeichnet, daß** die Anwesenheit von Hindernissen, zwischen der Aufnahmevorrichtung (10) und dem Ziel, die eine Bildleuchtdichte oder eine Farbe haben, die sich vom Hintergrund unterscheidet, durch einen Fehler der Korrelation des Hindernisses und der Umgebung im Bild bemerkt wird.

13. Verfahren nach Anspruch 1, **dadurch gekennzeichnet, daß** eine zeitliche Filterung, vorhergehend oder rekursiv, an einem mathematischen Modell der Transformation durchgeführt wird.

14. Vorrichtung zur Modifizierung des Inhaltes von Bildern einer Sequenz aufeinanderfolgender Bilder, gekennzeichnet durch:
    - Aufnahmemittel (10, 24) die jedes Bild in der Form einer Pixelmatrix liefern, wobei die radiometrischen Werte eines jeden Pixels, die der Bildleuchtdichte und evtl. der Farbigkeit entsprechen, in numerischer Form vorliegen,
    - Speichereinrichtungen (28) der charakteristischen Punkte, die über eine Zielzone (14) im Bild verteilt sind, die nicht verformbar und zu ersetzen sind ,
    - Einrichtungen (26) um die charakteristischen Punkte wiederzuerkennen und automatisch und ohne menschliches Eingreifen in einem jeden Bild einer Sequenz von Bildern, die einen hohen Grad an räumlicher Korrelation zwischen den aufeinanderfolgenden Bildern zeigt, die charakteristischen Punkte zur Wiedererkennung der Form zu bestimmen, und
    - um von der Position der charakteristischen Punkte in dem vorliegenden Bild die Position und die Dimensionen der Zielzone abzuleiten;
    - Einrichtungen (30) um automatisch für jedes Bild die geometrische Transformation zu bestimmen, der ein gespeichertes Modell zu unterziehen ist, dem es gemäß der Veränderungen des Aussehens des Zielbereiches entspricht und
    - Einrichtungen (32, 36) zur Kombination, um in dem vorliegenden Bild die darstellenden Pixel des transformierten Modelles mit den darstellenden Pixel der Zielzone zu ersetzen.

15. Vorrichtung nach Anspruch 14, **dadurch gekennzeichnet, daß** die Speichereinrichtungen (28) vorgesehen sind, um eine Vielzahl von Darstellungen der Zielzone, komplettiert durch eine Vielzahl von Maßstäben, zu speichern und dadurch, daß Einrichtungen (38) vorgesehen sind um eine Vielzahl von Darstellungen, in demselben Maßstab wie das zu überlagernde Modell in der Zielzone zu speichern.

16. Vorrichtung nach Anspruch 14 oder 15, **dadurch gekennzeichnet, daß** es gleicherweise Einrichtungen (34) zum Vergleich einer gespeicherten Darstellung der Zielzone (32) und der Zielzone des vorliegenden realen Bildes (24) umfaßt, und daß mittels der Kombination (36) die Angabe der Pixel der Zielzone des vorliegenden realen Bildes geliefert werden, die schließlich zu ersetzen sind.

**Claims**

1. Method for modifying the content of a sequence of images representing an evolutionary scene, the images being able to be represented as a matricial arrangement of pixels, comprising:

   indicating a non-deformable target zone (14) to be replaced in the scene characterizing the location and size of the target zone by characterizing points, bound to said target zone, which are stored ;

   automatically detecting the target zone in the successive images of the same shot by carrying out search of the characterizing points whose representation is stored, such search being carried out by pattern recognition ; determining a position to be given in the image to a pattern superimposable on the target zone, stored by a digital form ;

   for each particular image of the sequence, automatically determining a geometrical transformation to be undergone by the pattern to make it much the aspect of the target zone, by a correlation computation between the relative locations of the characterized points in the particular image and their stored location corresponding to the patent and carrying out that transformation on the stored pattern, and
   substituting, in the image, the pixels representative of a transformed pattern to the pixels representative of the target zone.

2. Method according to claim 1, characterized in that elements which belong to the target zone itself, such as contour elements or a screen, are used, as characterized in points, for determining the location and angular positions of the target zone.

3. Method according to claim 1 or 2, characterized in that elements distributed about the target zone itself are used as characterizing points for determining a location and angular position of the target zone.

4. Method according to claim 1, 2 or 3, characterized in that by storing a plurality of representations of the target zone at different scales and possibly at different angular positions and a plurality of representations of the pattern at the same scales and angular positions and by determining the optimal geometric transformation which enables to pass from the target zone of the current image to one of the representations of the target zone, in order to be able to subject the associated representation of the pattern to the corresponding transformation before substitution thereof.

5. Method according to claim 4, characterized in that the stored representations of the target zone are at scales which derive from each other by multiplication by a root of two.

6. Method according to any one of the preceding claims, for substituting a target consisting of an advertisement panel containing $\alpha$ numeric characters, characterized in that the characterizing points comprise of said characters, each defined on a neighbourhood of pixels.

7. Method according to claim 6, characterized in that the neighbourhood is of 6x8 pixels.

8. Method according to any one of the preceding claims, characterized by searching the characterizing points in a current image only in a part of that image which derives from that part of the preceding image where said points were found by taking into account constraints which limit the changes from an image to the next.

9. Method according to any one of claims 4-7 characterized by further determining the optimum colorimetric transformation for passing from the target zone of the current image to one of the stored representations of the target zone and by impressing the same transformation to the associated representation of the pattern.

10. Method according to any one of the claims 4-7 and 9, characterized in that the optimum geometric and/or transformation is determined by carrying out a plurality of different transformations and comparing the results or in that a synthesis of the transformations which give the best results.

11. Method according to any one of the preceding claims, characterized by detecting the presence of obstacles between the shot taking operators (10) delivering the sequence of image, by comparing a stored representation of a target zone and the target zone in the actual current image and by substituting the pixels representing the pattern only in those portions of the target zone which do not present significant difference.

12. Method according to any one of claims 1-10, characterized by detecting the presence of obstacles having a luminance or a colour which differs from the background, between the short taking operators (10) and the target, using a loss of correlation between the obstacle and the environment in the image.

13. Method according to claim 1, characterized by carrying out a predictive or recursive time featuring on a mathematical model of the transformation.

14. Device for modifying the content of images of a sequence of successive images, comprising:

shot taking means (10,24) delivering each image as a matricial arrangement of pixels, radiometric values corresponding to the luminance and possibly to the chrominance of each pixel being in digital form,

means for storing distributed characterizing points for locating a target zone, not deformable and to be replaced, in the image,

means (26) for recognizing the characterizing points and determining automatically, and without human intervention, on each image of a sequence of images having a high degree of spatial correlation between successive images, the characterizing points, by pattern recognition, and

for deriving, from the position of the characterizing points in the current image, the position and size of the target zone ;

means (30) for automatically determining, for each image, the geometrical transformation to be impressed to a stored pattern for it to correspond to variations of the aspects of the target zone, and

combination means (32,36) for substituting, in the current image, the pixels representing the transformed pattern to the pixels representing the target zone.

15. Device according to claim 14, characterized in that the storing means (28) are arranged for storing a plurality of representations of the complete target zone at the plurality of scales and in that means (38) are provided for storing a plurality of representations, at the same scales of the model which may be superimposed to the target zone.

16. Device according to claim 14 or 15, characterized in that it further comprises means (34) for comparing a stored representation of the target zone (32) and for delivering to the combination means (36) an indication of the pixels of the target zone of the current actual image which are not masked by said representation, which are the only ones to be replaced.

FIG.1.

FIG.2.

FIG.3A.

```
┌─────────────────────────────┐
│   PRÉPARATION DU PATRON     │
│ PAR SCANNER, PAR CAMÉRA     │
│  OU PAR PALETTE GRAPHIQUE   │
└─────────────────────────────┘
              │
              ▼
┌─────────────────────────────┐
│    IMAGES DU PATRON         │
│   À PLUSIEURS ÉCHELLES      │
└─────────────────────────────┘
              │
              ▼
┌─────────────────────────────┐
│       DÉFINITION            │
│    DE LA ZONE CIBLE         │
└─────────────────────────────┘
              │
┌──────────────────┐          │
│  MISE À JOUR      │          │
│  ÉVENTUELLE       │──────────┤
│  DE LA CIBLE      │          │
└──────────────────┘          │
              ▲               ▼
              │    ┌─────────────────────────┐
              │    │   EXTRACTION DES         │
              │    │   INFORMATIONS           │
              │    │   CARACTÉRISTIQUES       │
              │    │   DE LA CIBLE            │
              │    └─────────────────────────┘
              │               │
              │               ▼
              │    ┌─────────────────────────┐
              │    │    ACQUISITION           │
              │    │  DE L'IMAGE COURANTE     │
              │    └─────────────────────────┘
              │               │
              │               ▼
              │    ┌─────────────────────────┐
              │    │    EXTRACTION            │
              │    │  DES INFORMATIONS        │
              │    │  CARACTÉRISTIQUES        │
              │    └─────────────────────────┘
              │               │
              │               ▼
              │    ┌─────────────────────────┐
              │    │    CORRÉLATION           │
              │    │  DES INFORMATIONS        │
              │    │  CARACTÉRISTIQUES        │
              │    └─────────────────────────┘
              │               │
              │               ▼
              │    ┌─────────────────────────┐
              │    │       CALCUL             │
              │    │ DU MODÈLE GÉOMÉTRIQUE ET │
              │    │ DU MODÈLE COLORIMÉTRIQUE │
              │    └─────────────────────────┘
```

FIG.3B.

```
                              ↓  ↓  ↓
                    ┌─────────────────────────┐
                    │ FILTRAGE TEMPOREL       │
                    │ DES MODELES             │
                    │ GÉOMÉTRIQUES ET         │
                    │ COLORIMÉTRIQUES         │
                    └─────────────────────────┘
```

┌─────────────────────────┐
│ RECTIFICATION           │
│ GÉOMÉTRIQUE             │
│ ET COLORIMÉTRIQUE       │
│ INVERSE                 │
│ DE L'IMAGE COURANTE     │
└─────────────────────────┘

┌─────────────────────────┐
│ RECTIFICATION           │
│ DE L'IMAGE              │
│ DE LA CIBLE             │
└─────────────────────────┘

┌─────────────────────────┐
│ RECTIFICATION           │
│ IMAGE PATRON            │
└─────────────────────────┘

┌─────────────────────────┐
│ DIFFÉRENCE              │
│ ENTRE IMAGE COURANTE    │
│ ET CIBLE RECTIFIÉE      │
└─────────────────────────┘

┌─────────────────────────┐
│ DÉTERMINATION           │
│ DES MASQUAGES           │
│ ET TRANSPARENCES        │
└─────────────────────────┘

┌─────────────────────────┐
│ INCRUSTATION            │
│ AVEC MASQUAGE           │
│ DU PATRON RECTIFIÉ      │
│ DANS L'IMAGE COURANTE   │
└─────────────────────────┘

┌─────────────────────────┐
│ RESTITUTION             │
│ DE L'IMAGE COURANTE     │
└─────────────────────────┘

┌─────────────────────────┐
│ EMISSION                │
│ OU STOCKAGE             │
└─────────────────────────┘

# FIG.4A.

PREPARATION DU MODELE DE CIBLE

Acquisition de la Cible
depuis le magnétoscope

Désignation de la Cible
par deux points diagonaux opposés
fenêtre : FMC
avec ses composantes_Y,_DR,_DB

Extraction des points caractéristiques environ 15
(points anguleux des lignes de contraste
de luminance ou de couleur,
et/ou points à fort indice de texture)
Liste : LPC_FMC

**Reéchantillonnage**
à quatre échelles réduites par pas de racine de 2,
et une échelle agrandie de racine de 2
avec interpolation bi-cubique
Fenêtres : FMCRn

Extraction des points caractéristiques
à chaque échelle par la même méthode
Listes : PC_FMCRn

Vers FIG.4B.

# FIG.4B.

ACQUISITION ET LOCALISATION DE LA CIBLE

En début de plan, charger la mémoire d'images avec
le plan-séquence ou le début du plan séquence

Acquisition de la trame courante
Trame : TCt avec composantes

pour la première trame seulement t = t0
désignation du panneau - cible
par 2 points diagonaux opposés
Fenêtre : FTCt0
et estimer l'échelle correspondante
Echelle : ECHt0

Corrélation des points caractéristiques
avec ceux du modèle de cible
liste de points corrélés : LPCCt

Calcul de la transformation géométrique
Instantanée modèle à cible par régression linéaire
sur les coordonnées des points de PLCCt
polynômes en x et y de dégré 1
Polynômes : GXt et GYt
et calculer l'échelle ECHt

Filtrage temporel des paramètres de
la transformation géométrique
sur 5 trames consécutives
Polynômes GXFt et GYFt

Estimation de l'échelle de transformation
pour la prochaine trame
ECHt+1

Vers FIG.4C

16

# FIG. 4 C.

ESTIMATION DE LA TRANSFORMATION DE COULEUR

entre les points caractéristiques du Modèle-Cible
et ceux du Panneau-Cible, par régression linéaire
sur les intensités des points homologues
$TY = ay + b$

Détection des obstacles et des ombres

Charger le Modèle-Cible de même échelle

Corriger la colorimétrie
FMCCRn_Y = TY(FMCRn_Y)

Transformer la géométrie par GXFt et GYFt
par interpolation bi-cubique
FMCCRnG_Y, FMCCRnG_DR, FMCCRnG_DB

Détecter les ombres portées en comparant FMCCRnG_Y à
FTCt_Y
avec petite tolérance sur DR et DB
Masque avec atténuation : MSHAt

Détecter les obstacles en comparant les composants Y, DR et DB
Masque binaire MOBBt

Filtrer spatialement par Fermeture (morphologie mathématique)
et temporellement les masques avec deux trames t antérieures
Masques MSHAFt et MOBBFt

de FIG.4E.                                              3

# FIG.4D.

INCRUSTATION DU PANNEAU ISSU DU PATRON

Charger le Modèle-Patron de même échelle ECHt
FMP avec ses composantes _Y,_DR,_DB

Corriger la colorimétrie
FMP_Y = TY(FMP_Y)

Transformer la géométrie par GXFt et GYFt
avec interpolation bi-cubique
FMPG avec ses composants _Y,_DR_,_DB
résultats dans FTCTt Fenêtre Trame Courante Transformée

Insérer les ombres dans la Trame Courante Transformée
FTCTt_Y=FTCTt_Y*(1-MSHAFt)

Insérer les obstacles
Si le point courant fait partie du masque MOBFt
alors remplacer FTCTt avec ses composantes
par FTCt avec ses composantes

Insérer la nouvelle fenêtre dans la Trame Courante Transformée
copier FTCT dans TCTt

de FIG.4E.

Vers FIG.4E

Vers FIG.4B.    FIG.4E.

Recopier la trame TCTt sur la mémoire d'image de sortie

En fin de plan, ou si la mémoire de sortie est pleine alors recopier la mémoire de sortie sur magnétoscope

Si le plan-séquence n'est pas terminé, charger la mémoire d'images avec la suite du plan-séquence

SINON FIN

Pour poursuivre, reprendre l'étape Acquisition-Localisation du Panneau-cible